# EUROPÄISCHE PATENTANMELDUNG

(11) **EP 4 012 516 A1**
(43) Veröffentlichungstag der Anmeldung: **15.06.2022**
(21) Anmeldenummer: 20306536.2
(22) Anmeldetag: 10.12.2020
(51) Int. Cl.: G05B 19/05

(54) **AUSFÜHRUNGSUMGEBUNG FÜR EINE SPEICHERPROGRAMMIERBARE STEUERUNG**

(71) Anmelder: Schneider Electric Industries SAS, 92500 Rueil-Malmaison (FR)
(72) Erfinder: Würr, Marcus, 97837 Erlenbach (DE); Diehm, Sebastian, 97877 Wertheim (DE)
(74) Vertreter: Manitz Finsterwald Patent- und Rechtsanwaltspartnerschaft mbB

(57) **Zusammenfassung**

Es wird ein Verfahren angegeben, welches zur Ausführung eines ereignisorientierten Steuerprogramms auf einer speicherprogrammierbaren Steuerung eines Automatisierungssystems dient, wobei das Steuerprogramm mehrere Funktionsmodule umfasst, wobei eine Ausführung der einzelnen Funktionsmodule ereignisgesteuert bei Eintritt von den einzelnen Funktionsmodulen jeweils zugeordneten Aktivierungsereignissen ausgelöst wird und wobei den Aktivierungsereignissen jeweils Prioritäten zugewiesen sind. Das Verfahren umfasst die folgenden Schritte:
- Erfassen eingetretener Aktivierungsereignisse;
- Ausführung der den eingetretenen Aktivierungsereignissen jeweils zugeordneten Funktionsmodule in einer anhand der Prioritäten der einzelnen Aktivierungsereignisse festgelegten Ausführungsreihenfolge.

## Beschreibung

Die vorliegende Erfindung betrifft ein Verfahren zur Ausführung eines ereignisorientierten Steuerprogramms auf einer speicherprogrammierbaren Steuerung eines Automatisierungssystems, sowie eine Ausführungsumgebung zur Ausführung eines ereignisorientierten Steuerprogramms auf einer speicherprogrammierbaren Steuerung eines Automatisierungssystems.

Automatisierungssysteme mit speicherprogrammierbaren Steuerungen werden in der Automatisierungstechnik unter anderem zur Steuerung automatisierter Prozesse und Maschinenabläufe eingesetzt. Hierzu sind die speicherprogrammierbaren Steuerungen üblicherweise mit Sensoren der Automatisierungssysteme verbunden, welche einen Zustand des automatisierten Prozesses erfassen und den Zustand des Prozesses repräsentierende Sensorsignale an die Steuerung übermitteln. Die Steuerung erzeugt dann auf Grundlage einer logischen Verknüpfung der eingelesenen Sensorsignale Ausgangssignale zur Ansteuerung von Aktoren der Automatisierungssysteme, wobei die Aktoren auf Grundlage der Ausgangssignale den Zustand des automatisierten Prozesses beeinflussen. Sensoren können beispielsweise Positionsgeber, Drehgeber, Schalter, Lichtschranken oder ähnliches sein, wogegen Aktoren beispielsweise Antriebe, Relais oder Schütze sein können.

Die logischen Verknüpfungen zur Verarbeitung der eingelesenen Sensorsignale und zur Erzeugung der Ausgangssignale sind üblicherweise Bestandteile eines Steuerprogramms der speicherprogrammierbaren Steuerung, welches in einem Speicherbaustein der Steuerung hinterlegt ist. Zur Ausführung des Steuerprogramms umfassen speicherprogrammierbare Steuerungen üblicherweise eine Ausführungsumgebung, die die Steuerbefehle des Steuerprogramms in einer vorgegebenen Reihenfolge ausführt. Zusätzlich kann die Ausführungsumgebung den für die Ausführung der Steuerbefehle benötigten Arbeitsspeicher verwalten und/oder das Einlesen der Sensorsignale, sowie das Ausgeben der Ausgangssignale koordinieren.

Um eine sichere und zuverlässige Steuerung automatisierter Prozesse zu gewährleisten, muss die Ausführungsumgebung dazu eingerichtet sein, die Ausgangssignale innerhalb vordefinierter Reaktionszeiten nach dem Einlesen der Sensorsignale bereitzustellen. Derartige Systeme werden auch als echtzeitfähige Steuerungssysteme bezeichnet. Die Ausführungsumgebung muss dabei sicherstellen, dass die vordefinierten Reaktionszeiten unabhängig von der Auslastung des Systems und möglicher Programmierfehler eingehalten werden. Im Falle einer Überschreitung der Reaktionszeiten kann die Ausführungsumgebung geeignete Sicherheitsmaßnahmen einleiten.

Um einen zuverlässigen Betrieb des Automatisierungssystems sicherzustellen, muss die speicherprogrammierbare Steuerung in der Lage sein, für die Ausführung des Prozesses wesentliche und damit zeitkritische Reaktionen möglichst zeitnah auszuführen. Hierzu kann es erforderlich sein, die logischen Verknüpfungen zur Ausführung der zeitkritischen Reaktionen bevorzugt vor anderen auf der Steuerung ablaufenden logischen Verknüpfungen auszuführen.

Üblicherweise werden Steuerungssysteme für zeitkritische Anwendungen mittels zyklischer Ausführungsumgebungen realisiert. Bei derartigen Ausführungsumgebungen sind für das Einlesen der Sensorsignale, das Berechnen der Ausgangssignale und das Ausgeben der Ausgangssignale innerhalb jedes Zyklus feste Zeitfenster definiert, wobei sich die einzelnen Zeitfenster über mehrere Zyklen der Reihe nach periodisch wiederholen. Die Zeitfenster definieren dann auch die maximalen Reaktionszeiten des Steuerungssystems.

Neben zyklischen Steuerprogrammen und Ausführungsumgebungen werden in der Automatisierungstechnik auch ereignisgesteuerte Steuerprogramme eingesetzt, wie sie beispielsweise in der Norm IEC 61499 definiert sind. Derartige Steuerprogramme umfassen eine Mehrzahl von Funktionsbausteinen, wobei das Einlesen der Sensorsignale, das logische Verknüpfung der eingelesenen Sensorsignale oder das Ausgeben der Ausgabesignale jeweils durch Kombinationen einzelner Funktionsbausteine und zusätzlichem benutzerdefiniertem Programmtext (Code) realisiert wird. Die Ausführung der Funktionsbausteine erfolgt dabei ereignisgesteuert bei Eintritt von den einzelnen Funktionsbausteinen jeweils zugeordneten Aktivierungsereignissen, wobei die Aktivierungsereignisse nachfolgend auszuführender Funktionsbausteine bei der Ausführung vorangehender Funktionsbausteine erzeugt werden.

Ereignisgesteuerte Ausführungsmodelle eignen sich unter anderem für verteilte Steuersysteme, bieten jedoch aufgrund des Fehlens vordefinierter Verarbeitungszyklen wenig Möglichkeiten, eine bevorzugte Ausführung zeitkritischer Teile des Steuerprogramms sicherzustellen. Um die Wahrscheinlichkeit sicherheitskritischer Reaktionszeitüberschreitungen zu reduzieren, wird die Rechenkapazität bei ereignisgesteuerten Steuerungen üblicherweise weit überdimensioniert, beispielsweise um 50%. Dann steht in der Regel auch noch bei hoher Auslastung genügend Rechenkapazität zur rechtzeitigen Ausführung der Funktionsbausteine zur Verfügung.

Es ist Aufgabe der Erfindung ein Verfahren zur Ausführung eines ereignisorientierten Steuerprogramms auf einer speicherprogrammierbaren Steuerung eines Automatisierungssystems, sowie eine Ausführungsumgebung zur Ausführung eines ereignisorientierten Steuerprogramms auf einer speicherprogrammierbaren Steuerung eines Automatisierungssystems derart anzugeben, dass eine rechtzeitige Ausführung zeitkritischer Teile des Steuerprogramms sichergestellt wird.

Diese Aufgabe wird durch ein Verfahren zur Ausführung eines Steuerprogramms auf einer speicherprogrammierbaren Steuerung eines Automatisierungssystems, sowie eine Ausführungsumgebung zur Ausführung eines Steuerprogramms auf einer speicherprogrammierbaren Steuerung eines Automatisierungssystems gemäß den unabhängigen Ansprüchen gelöst. Weiterbildungen sind jeweils in den abhängigen Ansprüchen angegeben.

Es wird ein Verfahren angegeben, welches zur Ausführung eines ereignisorientierten Steuerprogramms auf einer speicherprogrammierbaren Steuerung eines Automatisierungssystems dient, wobei das Steuerprogramm mehrere Funktionsmodule umfasst, die Ausführung der einzelnen Funktionsmodule ereignisgesteuert bei Eintritt von den einzelnen Funktionsmodulen jeweils zugeordneten Aktivierungsereignissen ausgelöst wird und wobei den Aktivierungsereignissen jeweils Prioritäten zugewiesen sind. Das Verfahren umfasst die folgenden Schritte:
- Erfassen eingetretener Aktivierungsereignisse;
- Ausführung der den eingetretenen Aktivierungsereignissen jeweils zugeordneten Funktionsmodule in einer anhand der Prioritäten der einzelnen Aktivierungsereignisse festgelegten Ausführungsreihenfolge.

Im Rahmen der Erfindung wurde erkannt, dass eine rechtzeitige Ausführung zeitkritischer Teile des Steuerprogramms auf besonders einfache und flexible Art und Weise dadurch sichergestellt werden kann, dass zunächst den einzelnen Aktivierungsereignissen, welche während der Ausführung des Steuerprogramms auftreten, Prioritäten zugewiesen werden und dass die Reihenfolge, in der die einzelnen Funktionsmodule nach dem Auftreten ihrer zugeordneten Aktivierungsereignisse ausgeführt werden, durch die Prioritäten der jeweiligen Aktivierungsereignisse bestimmt wird. Indem die Ausführungsreihenfolge der Funktionsmodule durch die Priorität der Aktivierungsereignisse festgelegt wird, ist es insbesondere möglich, Funktionsmodule, welche über mehrere Aktivierungsereignisse ausgelöst werden können, in Abhängigkeit vom auslösenden Aktivierungsereignis mit unterschiedlichen Prioritäten auszuführen. Dies ermöglicht eine deutlich flexiblere Priorisierung der Ausführung zeitkritischer Programmteile als es beispielsweise bei einer starren Zuweisung der Prioritäten zu den einzelnen Funktionsmodulen der Fall wäre.

Die Funktionsmodule des Steuerprogramms können jeweils mindestens eine logische Verknüpfung umfassen, wobei eine Ausführung der logischen Verknüpfungen der einzelnen Funktionsmodule jeweils durch die den einzelnen Funktionsmodulen zugeordneten Aktivierungsereignisse ausgelöst wird. Die logischen Verknüpfungen der einzelnen Funktionsmodule können beispielsweise ein jeweiliger Bestandteil eines Algorithmus des betreffenden Funktionsmoduls sein. Eine Beziehung der Aktivierungsereignisse der einzelnen Funktionsmodule des Steuerprogramms untereinander kann jeweils über Ereignisverbindungen, welche die einzelnen Funktionsmodule miteinander verbinden, vorgegeben sein. Das Steuerprogramm kann beispielsweise die Vorgaben der Norm IEC 61499 erfüllen und bei den Funktionsmodulen kann es sich beispielsweise um in dieser Norm definierte Funktionsbausteine (*function blocks*) handeln.

Nacheinander auszuführende Funktionsmodule des Steuerprogramms können jeweils dazu eingerichtet sein, bei ihrer Ausführung Aktivierungsereignisse zu erzeugen, welche die Ausführung des jeweilig unmittelbar nachfolgend auszuführenden Funktionsmoduls des Steuerprogramms auslösen. Insofern können die Funktionsmodule, beispielsweise über Ereignisverbindungen, zu einzelnen Ereignisketten verbunden sein, wobei das Aktivierungsereignis jedes nachfolgenden Funktionsmoduls der Ereigniskette bei Ausführung eines unmittelbar vorangehend ausgeführten Funktionsmoduls der Ereigniskette erzeugt wird.

Allgemein können die Ereignisketten jeweils alle Aktivierungsereignisse umfassen, welche aufgrund eines vorgegebenen Anfangsereignisses erzeugt werden, um die Ausführung der der Reihe nach auszuführenden Funktionsmodule bis zu einem als letztes Funktionsmodul der Ereigniskette auszuführenden Abschlussmodul auszulösen. Bei dem Anfangsereignis kann es sich beispielsweise um ein externes Aktivierungsereignis handeln, welches bei einer Aktivierung einer externen Eingangsschnittstelle der Ausführungsumgebung bereitgestellt wird. Die externe Eingangsschnittstelle kann beispielsweise eine Schnittstelle zu einer die Ausführungsumgebung ausführenden Ausführungsressource der Steuereinheit sein. Insbesondere kann die externe Eingangsschnittstelle eine externe Schnittstelle, etwa ein Sensoreingang, eines das Steuerprogramm ausführenden Geräts sein.

Das Anfangsereignis kann beispielsweise auf Grundlage eines durch die Steuereinheit empfangenen Sensorsignals bereitgestellt werden, beispielsweise bei einem Empfang des Sensorsignals durch die Steuereinheit oder bei einer Statusänderung des durch die Steuereinheit empfangenen Sensorsignals. Ein durch das Anfangsereignis als erstes Funktionsmodul aktiviertes Anfangsmodul kann beispielsweise ein als *responder function block* konfigurierter *service interface function block* gemäß IEC 61499 sein.

Das Abschlussmodul wird durch das letzte Funktionsmodul der Ereigniskette definiert, nach dessen Ausführung keine Aktivierungssignale zur Ausführung weiterer Funktionsmodule des Steuerprogramms mehr erzeugt werden. Bei dem Abschlussmodul kann es sich beispielsweise um ein Funktionsmodul handeln, welches dazu eingerichtet ist, ein Ausgangssignal für einen Aktor über eine externe Ausgabeschnittstelle der Ausführungsumgebung auszugeben. Das Abschlussmodul kann beispielsweise ein als *requester function block* konfigurierter *service interface function block* gemäß IEC 61499 sein.

Die Aktivierung des Anfangsmoduls der Ereigniskette kann beispielsweise durch ein Eingangssignal, beispielsweise ein Sensorsignal, ausgelöst werden. Die Ereigniskette kann beispielsweise alle Aktivierungsereignisse umfassen, welche, ausgelöst durch einen Empfang des Eingangssignals, der Reihe nach erzeugt werden, bis ein auf Grundlage des Eingangssignals erzeugtes Ausgangssignal über die Ausgabeschnittstelle ausgegeben wird.

Das Erfassen der eingetretenen Aktivierungsereignisse und die Ausführung der den eingetretenen Aktivierungsereignissen jeweils zugeordneten Funktionsmodule in der durch die Prioritäten festgelegten Ausführungsreihenfolge kann beispielsweise jeweils durch eine auf der Steuerung laufende Ausführungsumgebung durchgeführt werden. Zur Ausführung durch die Ausführungsumgebung kann das Steuerprogramm in einem Speicherbaustein der Steuerung hinterlegt sein.

Die Ausführungsumgebung kann mehrere getrennt voneinander ausführbare Teilumgebungen umfassen, wobei die einzelnen Teilumgebungen dazu ausgebildet sind, auf getrennten Ausführungsressourcen der Steuerung ausgeführt zu werden. Die Ausführungsressourcen können beispielsweise Tasks, Prozessoren, oder ähnliches sein. Beispielsweise können die Ausführungsressourcen in der IEC 61499 definierte Ressourcen sein.

Das Zuweisen der Prioritäten zu den einzelnen Aktivierungsereignissen kann beispielsweise bei einer Erstellung des Steuerprogramms erfolgen, beispielsweise mittels einer zu Erstellung des Steuerprogramms ausgebildeten Programmierumgebung. Die Prioritäten können den einzelnen Aktivierungsereignissen beispielsweise dadurch zugewiesen sein, dass sie einzelnen Ereignisverbindungen zwischen den Funktionsmodulen zugewiesen sind. Die Ereignisverbindungen verbinden dabei jeweils das Funktionsmodul, dem ein einzelnes Aktivierungsereignis zugeordnet ist und das bei einem Eintreten des Aktivierungsereignisses ausgeführt wird, mit einem zuvor ausgeführten Funktionsmodul, bei dessen Ausführung das Aktivierungsereignis erzeugt wird. Die den einzelnen Aktivierungsereignissen zugeordneten Prioritäten können in dem Steuerprogramm hinterlegt sein und von der Ausführungsumgebung bei der Ausführung des Steuerprogramms verwendet werden.

Durch die anhand der Prioritäten der einzelnen Aktivierungsereignisse bestimmte Ausführungsreihenfolge wird festgelegt, in welcher Reihenfolge die einzelnen Funktionsmodule bei einem gleichzeitigen Vorliegen mehrerer Aktivierungsereignisse ausgeführt werden. Insofern liegen die Prioritäten fest, in welcher Reihenfolge gleichzeitig vorliegende Aktivierungsereignisse abgearbeitet werden. Dabei kann ein neu eingetretenes Aktivierungsereignis beispielsweise vor allen zuvor eingetretenen Aktivierungsereignissen niedrigerer Priorität und nach allen zuvor eingetretenen Aktivierungsereignissen höherer Priorität abgearbeitet werden.

Zur Abarbeitung der eingetretenen Aktivierungsereignisse kann zusätzlich zu den Prioritäten eine vorbestimmte Abarbeitungsstrategie verwendet werden. Eine derartige Abarbeitungsstrategie kann beispielsweise FIFO (*first-in-first-out*)*,* LIFO (*last-in-first-out*)*, depth first* oder *breadth first* sein. Die Abarbeitungsstrategie kann beispielsweise festlegen, in welcher Reihenfolge eingetretene Aktivierungsereignisse gleicher Priorität abgearbeitet werden.

Die Ausführungsumgebung kann zur Festlegung der Ausführungsreihenfolge zumindest eine Abarbeitungsliste verwalten und hierzu ein Listenverwaltungsmodul umfassen. Eine derartige Abarbeitungsliste kann auch als *event queue* bezeichnet werden. Die Ausführungsumgebung kann für jede Ausführungsressource zumindest eine, beispielsweise genau eine Abarbeitungsliste, verwalten.

Die Ausführungsumgebung kann dazu ausgebildet sein, eine ereignisgesteuerte Zeitablaufsteuerung (*event triggered scheduling*) auszuführen. Die Ausführungsumgebung kann auch dazu ausgebildet sein, eine verfügbare Rechenleistung der speicherprogrammierbaren Steuerung nach vorgegebenen Kriterien auf die einzelnen Funktionsmodule des Steuerprogramms zu verteilen, beispielsweise gleichmäßig (*fair scheduling*)*.* Die Ausführungsumgebung kann hierzu eine zyklische Zeitablaufsteuerung implementieren. Beispielsweise kann die Ausführungsumgebung alle Instanzen von Funktionsmodulen zyklisch auf ausstehende Aktivierungsereignisse abfragen (*cyclic scan approach*) und ausstehende Aktivierungsereignisse gemäß der durch die Prioritäten vorgegebenen Abarbeitungsreihenfolge abarbeiten.

Das Steuerprogramm kann zeitkritische Funktionsmodule und zeitunkritische Funktionsmodule umfassen. Die zeitkritischen Funktionsmodule können über zeitkritische Ereignisverbindungen zu einer zeitkritischen Ereigniskette verbunden sein und die zeitunkritischen Funktionsmodule können über zeitunkritische Ereignisverbindungen zu einer zeitunkritischen Ereigniskette verbunden sein. Den Aktivierungsereignissen der zeitkritischen Ereignisverbindungen kann dann jeweils eine höhere Priorität zugewiesen sein als den Aktivierungsereignissen der zeitunkritischen Ereignisverbindungen.

Mittels der zeitkritischen Ereigniskette können beispielsweise nach einem Einlesen von zeitkritischen Eingangssignalen zeitkritische Ausgangssignale erzeugt werden. Die zeitkritischen Eingangssignale und/oder die zeitkritischen Ausgangssignale können beispielsweise prozesswesentliche und/oder maschinenkritische und/oder sicherheitsrelevante und/oder sicherheitsgerichtete Eingangssignale bzw. Ausgangssignale sein. Dabei können prozesswesentliche Signale für die unmittelbare Ausführung des gesteuerten Prozesses, beispielsweise eine laufende Maschinenbewegung, notwendig sein. Maschinenkritische Signale können für die Funktionsfähigkeit der Maschine notwendige Signale sein. Sicherheitsrelevante oder sicherheitsgerichtete Signale können zur Vermeidung von Maschinenschäden und/oder Personenschäden notwendige Signale sein. Die zeitkritische Ereigniskette kann beispielsweise eine Sicherheitsfunktion ausführen. Die zeitkritische Ereigniskette kann aber auch eine Reaktion auf ein bei der Ausführung des Steuerprogramms aufgetretenes Ausnahmeereignis ausführen. Das Ausnahmeereignis kann beispielsweise ein Fehler und die Reaktion eine Fehlerreaktion sein. Das Ausnahmeereignis kann auch ein Alarm und die Reaktion eine Alarmreaktion sein.

Das angegebene Verfahren kann insbesondere dazu verwendet werden, eine priorisierte Ausführung zeitkritischer Programmteile des ereignisorientierten Steuerprogramms auszuführen. Dabei ist es nicht notwendig, dass die Ausführungsreihenfolge aller Funktionsmodule des Steuerprogramms durch einen zentralen Dienst der Ausführungsumgebung verwaltet wird. Dies ermöglicht es beispielsweise, Teile des Steuerprogramms auch in einer auf mehrere Ausführungsressourcen verteilten Ausführungsumgebung zu priorisieren. Dabei ist für die Priorisierung insbesondere keine Kommunikation aller Ausführungsressourcen untereinander notwendig. Dies ermöglicht es unter anderem, bei der Ausführung des Steuerprogramms auf einen zentralen *error handler* zu verzichten.

Das Automatisierungssystem kann beispielsweise Maschinen oder selbstfahrende Fahrzeuge automatisiert steuern. Das Automatisierungssystem kann beispielsweise Antriebe umfassen, die mittels des Steuerprogramms gesteuert werden. Das Automatisierungssystem kann zusätzlich oder alternativ auch Sicherheitsfunktionen implementieren und insofern ein sicherheitsgerichtetes Steuerungssystem sein.

Bei einer Weiterbildung des Verfahrens weist das Steuerprogramm ein gemeinsames Funktionsmodul auf, dessen Ausführung durch ein erstes und ein zweites Aktivierungsereignis auslösbar ist, wobei dem ersten und zweiten Aktivierungsereignis unterschiedliche Prioritäten zugewiesen sind. Dabei wird das gemeinsame Funktionsmodul bei einer Auslösung durch das erste Aktivierungsereignis mit der Priorität des ersten Aktivierungsereignisses und bei einer Auslösung durch das zweite Aktivierungsereignis mit der Priorität des zweiten Aktivierungsereignisses ausgeführt. Dies ermöglicht eine besonders flexible Anpassung der Ausführungsreihenfolge an die die einzelnen Funktionsmodule auslösenden Ereignisse.

Beispielsweise kann das erste Aktivierungsereignis Teil einer zeitkritischen Ereigniskette und das zweite Aktivierungsereignis Teil einer zeitunkritischen Ereigniskette sein, wobei dem ersten Aktivierungsereignis eine höhere Priorität zugewiesen ist als dem zweiten Aktivierungsereignis. Einem dritten Aktivierungsereignis zur Aktivierung eines weiteren Funktionsmoduls kann eine dritte Priorität zugewiesen sein, welche niedriger als die Priorität des ersten Aktivierungsereignisses und höher als die Priorität des zweiten Aktivierungsereignisses ist. Wird das gemeinsame Funktionsmodul nun durch das erste Aktivierungsereignis ausgelöst, wird es vor dem weiteren Funktionsmodul ausgeführt, während es, falls es durch das zweite Aktivierungsereignis ausgelöst wird, erst nach dem weiteren Funktionsmodul ausgeführt wird.

Bei einer Weiterbildung umfasst das Verfahren ein Eintragen der eingetretenen Aktivierungsereignisse in zumindest einer Abarbeitungsliste unter Berücksichtigung der Prioritäten der einzelnen Aktivierungsereignisse. Eine derartige Abarbeitungsliste ermöglicht eine besonders einfache Festlegung und Überwachung der Abarbeitungsreihenfolge.

Die Prioritäten der einzelnen Aktivierungsereignisse können dabei festlegen, an welcher Position ein neu eingetretenes Aktivierungsereignis in die Abarbeitungsliste eingetragen wird. Beispielsweise kann ein neu eingetretenes Aktivierungsereignis derart in die Abarbeitungsliste eingetragen werden, dass es vor allen in der Liste befindlichen Aktivierungsereignissen niedrigerer Priorität und nach allen in der Liste befindlichen Aktivierungsereignissen höherer Priorität ausgeführt wird.

Die Abarbeitungsliste kann mittels der vorbestimmten Abarbeitungsstrategie abgearbeitet werden. Die Abarbeitungsstrategie kann beispielsweise festlegen, an welcher Position das neu eingetretene Aktivierungsereignis relativ zu bereits in der Liste befindlichen Aktivierungsereignissen gleicher Priorität angeordnet wird.

Zur Festlegung der Positionen, an denen neu eingetretene Aktivierungsereignisse vorgegebener Priorität in die Abarbeitungsliste einzutragen sind, kann die Ausführungsumgebung auch eine Mehrzahl von Zeigern, beispielsweise in einer Zeigerliste, verwalten, wobei die Mehrzahl von Zeigern jeweils einen Zeiger für jede mögliche Priorität umfasst. Die Zeiger der einzelnen Prioritäten bezeichnen dabei jeweils diejenige Position in der Abarbeitungsliste, an der ein neu eingetretenes Aktivierungsereignis der jeweiligen Priorität einzutragen ist.

Bei einer Weiterbildung des Verfahrens werden Aktivierungsereignisse unterschiedlicher Priorität in unterschiedliche Abarbeitungslisten eingetragen und die einzelnen Abarbeitungslisten umfassen jeweils nur Aktivierungsereignisse gleicher Priorität. Dies ermöglicht eine besonders ressourceneffiziente Festlegung der Abarbeitungsreihenfolge, da auf eine Suche innerhalb einer einzelnen Abarbeitungsliste, bei der die Position zur Eintragung eines neu eingetretenen Aktivierungsereignisses vorgegebener Priorität bestimmt wird, verzichtet werden kann.

Falls für jede mögliche Priorität eine eigene Abarbeitungsliste verwaltet wird, kann die Ausführungsumgebung dazu ausgebildet sein, ein als nächstes abzuarbeitendes Aktivierungsereignis dadurch zu bestimmen, dass die einzelnen Abarbeitungslisten beginnend mit der höchsten Priorität in absteigender Reihenfolge auf in den einzelnen Listen vorhandene Aktivierungsereignisse überprüft werden.

Bei einer Weiterbildung des Verfahrens werden durch neu erfasste Aktivierungsereignisse ausgelöste Funktionsmodule später ausgeführt als Funktionsmodule, die durch bereits zuvor erfasste Aktivierungsereignisse gleicher Priorität ausgelöste werden. Dies entspricht einer Ausführungsreihenfolge von Aktivierungsereignissen gleicher Priorität nach dem FIFO-Prinzip. Dabei wird die verfügbare Ausführungszeit gleichmäßig über alle eingetretenen Aktivierungsereignisse gleicher Priorität verteilt, sodass eine möglichst rasche und gleichmäßige Abarbeitung von Aktivierungsereignissen gleicher Priorität sichergestellt wird.

Bei einer Weiterbildung des Verfahrens werden durch neu erfasste Aktivierungsereignisse ausgelöste Funktionsmodule früher ausgeführt als Funktionsmodule, die durch bereits zuvor erfasste Aktivierungsereignisse gleicher Priorität ausgelöste werden. Dies entspricht einer Ausführungsreihenfolge von Aktivierungsereignissen gleicher Priorität nach dem LIFO-Prinzip. Dadurch kann erreicht werden, dass eine in Abarbeitung befindliche Ereigniskette zunächst vollständig abgearbeitet wird, bevor mit der Abarbeitung weiterer Ereignisketten begonnen wird. Dadurch können durch einzelne Ereignisketten ausgeführte Programmteile besonders schnell ausgeführt werden. Zudem kann der Arbeitsspeicher und/oder Cache der speicherprogrammierbaren Steuerung besonders effizient genutzt werden, da während der Abarbeitung der Funktionsmodule der ausgeführten Ereigniskette erzeugte Zwischenergebnisse sofort weiterverwendet werden.

Bei einer Weiterbildung des Verfahrens weist die speicherprogrammierbare Steuerung eine erste Ausführungsressource und eine mit der ersten Ausführungsressource über eine Kommunikationsverbindung verbundene zweite Ausführungsressource auf und das Steuerprogramm umfasst ein auf der ersten Ausführungsressource ausgeführtes erstes Teilprogramm und ein auf der zweiten Ausführungsressource ausgeführtes zweites Teilprogramm. Das Verfahren umfasst dabei ein Übertragen von auf der ersten Ausführungsressource eingetretenen Aktivierungsereignissen von der ersten Ausführungsressource über die Kommunikationsverbindung zu der zweiten Ausführungsressource, wobei das Übertragen mit anhand der Prioritäten der einzelnen Aktivierungsereignisse bestimmten Übertragungsprioritäten erfolgt.

Dadurch ist nicht nur eine Priorisierung einzelner Programmteile des Steuerprogramms innerhalb der einzelnen Ausführungsressourcen, sondern auch eine Priorisierung über mehrere, verteilt angeordnete Ausführungsressourcen hinweg möglich. Die Übertragungspriorität kann beispielsweise der Priorität der einzelnen Aktivierungsereignisse entsprechen. Die zweite Ausführungsressource kann dazu ausgebildet sein, die über die Kommunikationsverbindung empfangenen Aktivierungsereignisse in einer durch die Prioritäten der einzelnen Aktivierungsereignisse festgelegten Ausführungsreihenfolge weiterzuverarbeiten.

Die Kommunikationsverbindung kann eine interne Kommunikationsverbindung innerhalb eines Teilgeräts der speicherprogrammierbaren Steuerung sein, wobei die interne Kommunikationsverbindung mehrere auf dem Teilgerät vorhandene Ausführungsressourcen zur Ausführung des Steuerprogramms verbindet. Die Kommunikationsverbindung kann auch eine externe Kommunikationsverbindung zwischen mehreren Teilgeräten der speicherprogrammierbaren Steuerung sein, etwa ein Feldbus. Die einzelnen Aktivierungsereignisse können auf der Kommunikationsverbindung beispielsweise mittels eines Feldbusprotokolls übertragen werden. Alternativ oder zusätzlich können die Aktivierungsereignisse mittels eines verbindungslosen oder verbindungsorientierten Übertragungsprotokolls, beispielsweise mittels UDP, TCP oder dergleichen, übertragen werden. Die einzelnen Aktivierungsereignisse können auf der Kommunikationsverbindung in einzelnen Datenpaketen übertragen werden, wobei den einzelnen Datenpaketen für die Weiterleitung auf der Kommunikationsverbindung die Übertragungspriorität zugewiesen wird.

Bei einer Weiterbildung des Verfahrens wird eine Sendereihenfolge, mit der die einzelnen Aktivierungsereignisse von einer Sendeeinheit der ersten Ausführungsressource über die Kommunikationsverbindung gesendet werden, anhand der Prioritäten der einzelnen Aktivierungsereignisse festgelegt. Beispielsweise kann die Ausführungsumgebung dazu ausgebildet sein, die einzelnen Aktivierungsereignisse gemäß ihrer Priorität in einer Sendewarteschlange der Sendeeinheit abzulegen. Hierbei können die Aktivierungsereignisse auf die gleiche Art und Weise in die Sendewarteschlange eingetragen werden, wie es im Zusammenhang mit der Abarbeitungsliste beschrieben wird.

Die Sendeeinheit kann beispielsweise eine Anbindung eines Teilgeräts der speicherprogrammierbaren Steuerung an die Kommunikationsverbindung herstellen. Bei der Sendeeinheit kann es sich beispielsweise um eine Sendeeinheit eines Feldbusmoduls zur Anbindung des Teilgeräts an einen Feldbus handeln.

Alternativ oder zusätzlich wird eine Weiterleitungsreihenfolge, mit der die einzelnen Aktivierungsereignisse auf der Kommunikationsverbindung weitergeleitet werden, anhand der Prioritäten der einzelnen Aktivierungsereignisse festgelegt. Insbesondere können die die einzelnen Aktivierungsereignisse enthaltenden Datenpakete gemäß der Weiterleitungsreihenfolge über die Kommunikationsverbindung weitergeleitet werden, beispielsweise von in der Kommunikationsverbindung angeordneten Zwischengeräten, etwa Routern oder Switches.

Alternativ oder zusätzlich wird eine Ausgabereihenfolge, mit der die einzelnen Aktivierungsereignisse nach ihrem Empfang über die Kommunikationsverbindung von einer Empfangseinheit der zweiten Ausführungsressource zur Weiterverarbeitung ausgegeben werden, anhand der Prioritäten der einzelnen Aktivierungsereignisse festgelegt. Beispielsweise kann die Ausführungsumgebung dazu ausgebildet sein, die einzelnen Aktivierungsereignisse gemäß ihrer Priorität in einer Empfangswarteschlange der Empfangseinheit zur Weiterverarbeitung durch das zweite Teilprogramm bereitzuhalten. Hierbei können die Aktivierungsereignisse auf die gleiche Art und Weise in die Empfangswarteschlange eingetragen werden, wie es im Zusammenhang mit der Abarbeitungsliste beschrieben wird.

Bei einer Weiterbildung des Verfahrens wird einzelnen Aktivierungsereignissen ihre Priorität erst zu einer Ausführungszeit des Steuerprogramms zugewiesen, beispielsweise unter Berücksichtigung eines zur Ausführungszeit erzeugten Parameterwerts. Dies ermöglicht eine besonders flexible Priorisierung der einzelnen Aktivierungsereignisse. Den einzelnen Aktivierungsereignissen kann ihre Priorität beispielsweise bei ihrer Erzeugung durch die einzelnen Funktionsmodule des Steuerprogramms zugewiesen werden.

Bei einer Weiterbildung des Verfahrens werden die Aktivierungsereignisse nachfolgend auszuführender Funktionsmodule bei der Ausführung zuvor ausgeführter Funktionsmodule erzeugt, wobei den Aktivierungsereignissen der nachfolgend auszuführenden Funktionsmodule bei ihrer Erzeugung die Prioritäten derjenigen Aktivierungsereignisse zugewiesen werden, welche die Ausführung der jeweilig zuvor ausgeführten Funktionsmodule ausgelöst haben. Dadurch kann beispielsweise allen Aktivierungsereignissen einzelner Ereignisketten des Steuerprogramms automatisiert die gleiche Priorität zugewiesen werden. Insbesondere ist es lediglich notwendig, einem einzelnen Aktivierungsereignis mehrerer nacheinander erzeugter Aktivierungsereignisse eine Priorität zuzuweisen und beispielsweise in dem Steuerprogramm zu hinterlegen. Alle weiteren Prioritäten werden dann dynamisch zur Ausführungszeit des Steuerprogramms erzeugt.

Für einzelne der nacheinander abgearbeiteten Aktivierungsereignisse können in dem Steuerprogramm auch eigene Prioritäten hinterlegt sein. Die Ausführungsumgebung kann dann dazu ausgebildet sein, diesen einzelnen Aktivierungsereignissen anstelle der Prioritäten der Aktivierungsereignisse zur Ausführung der Funktionsmodule, die die betreffenden einzelnen Aktivierungsereignisse erzeugen, die in dem Steuerprogramm hinterlegten Prioritäten zuzuweisen.

Bei einer Weiterbildung des Verfahrens umfasst das Steuerprogramm ein Funktionsmodul, dessen Ausführung erst bei Eintritt eines ersten und mindestens eines zweiten Aktivierungsereignisses ausgelöst wird, wobei einem von diesem Funktionsmodul erzeugten Aktivierungsereignis eine Priorität zugewiesen wird, welche der niedrigsten Priorität der die Ausführung des Funktionsmoduls auslösenden Aktivierungsereignisse entspricht. Dadurch wird es ermöglicht, auch dem so erzeugten Aktivierungsereignis automatisiert eine eindeutige Priorität zuzuordnen. Zugleich wird vermieden, dass das Aktivierungsereignis eine unnötig hohe Priorität zugewiesen bekommt.

Bei einer Weiterbildung des Verfahrens werden bei der Ausführung des Steuerprogramms auf Grundlage eines Quellereignisses mehrere nachfolgende Aktivierungsereignisse erzeugt und eine Programmierumgebung zur Erstellung des Steuerprogramms weist automatisiert den mehreren nachfolgenden Aktivierungsereignissen die gleiche Priorität zu. Dadurch können den einzelnen Aktivierungsereignissen ihre Prioritäten besonders einfach zugewiesen werden.

Beispielsweise umfasst das Steuerprogramm eine Ereigniskette mit bei der Ausführung des Steuerprogramms auf Grundlage des Quellereignisses nacheinander erzeugten Aktivierungsereignissen, und die Programmierumgebung zur Erstellung des Steuerprogramms weist mehreren Aktivierungsereignissen der Ereigniskette automatisiert die gleiche Priorität zu.

Die nachfolgenden Aktivierungsereignisse können Aktivierungsereignisse von Funktionsmodulen umfassen, die nacheinander ausgeführt werden. Alternativ oder zusätzlich können die nachfolgenden Aktivierungsereignisse auch Aktivierungsereignissen von Funktionsmodule umfassen, die quasi-parallel ausgeführt werden, etwa mehrere Aktivierungsereignisse, die bei Ausführung eines einzelnen Funktionsmoduls erstellt werden.

Das Quellereignis kann beispielsweise das Anfangsereignis der Ereigniskette sein. Allgemein kann das Quellereignis auch ein externes Aktivierungsereignis sein.

Die Programmierumgebung kann dazu ausgebildet sein, die einzelnen Ereignisketten automatisiert zu detektieren. Hierzu kann die Programmierumgebung beispielsweise alle in Reaktion auf ein Eingangssignal ausgeführten Funktionsmodule bis zur Erzeugung eines in Abhängigkeit von dem Eingangssignal erzeugten Ausgangssignal der speicherprogrammierbaren Steuerung identifizieren, oder alle Funktionsmodule, die bis zu einer in Abhängigkeit von dem Eingangssignal erfolgenden Statusänderung der Steuerung ausgeführt werden. Umfasst dabei ein einzelnes Funktionsmodul mehrere Ereigniseingänge und/oder mehrere Ereignisausgänge, so kann die Programmierumgebung für jede mögliche Kombination von Ereigniseingängen und Ereignisausgängen eine eigene Ereigniskette erstellen.

Alternativ können bei einem Funktionsmodul mit mehreren Ereigniseingängen und/oder Ereignisausgängen auch interne Verbindungen zwischen den Ereigniseingängen und Ereignisausgängen innerhalb des Funktionsmoduls ermittelt werden und lediglich für jede Aktivierung eines Ereignisausgangs, welche bei der Ausführung des Funktionsmoduls in Reaktion auf die an den einzelnen Ereigniseingängen empfangenen Aktivierungsereignisse erfolgt, eine eigene Ereigniskette erstellt werden. Zur Ermittlung der Verbindungen zwischen den Ereigniseingängen und Ereignisausgängen kann die Programmierumgebung eine Benutzereingabe empfangen, welche die Verbindungen vorgibt. Die Programmierumgebung kann auch dazu ausgebildet sein, die bei Aktivierung des Funktionsmoduls über die einzelnen Ereigniseingänge jeweils ausgeführten logischen Verknüpfungen oder Algorithmen zu analysieren und die in Reaktion auf die einzelnen an den Ereigniseingängen anliegenden Aktivierungssignale aktivierten Ereignisausgänge zu bestimmen und daraus die Verbindungen zwischen den Ereigniseingängen und den Ereignisausgängen abzuleiten.

Die Programmierumgebung kann beispielsweise dazu ausgebildet sein, eine einem einzelnen Aktivierungsereignis der Ereigniskette zugewiesene Priorität automatisiert auch allen nachfolgend erzeugten und/oder allen zuvor erzeugten Aktivierungsereignissen zuzuweisen. Die Programmierumgebung kann beispielsweise dazu ausgebildet sein, die automatisierte Zuweisung erst nach Empfang einer Bestätigung durch den Benutzer über eine Eingabeschnittstelle durchzuführen.

Bei einer Weiterbildung des Verfahrens ist die den mehreren Aktivierungsereignissen zugewiesene Priorität durch einen Benutzer der Programmierumgebung vorgebbar. Dies ermöglicht eine benutzerdefinierte Anpassung der Prioritäten der Ereigniskette.

Beispielsweise kann bei einer benutzerdefinierten Anpassung der Priorität eines einzelnen Aktivierungsereignisses der Ereigniskette durch die Programmierumgebung allen nachfolgenden Aktivierungsereignissen der Ereigniskette die gleiche Priorität zugewiesen werden. Alternativ oder zusätzlich kann auch allen vorhergehenden Aktivierungsereignissen der Ereigniskette die gleiche Priorität zugewiesen werden.

Die Programmierumgebung kann auch dazu ausgebildet sein, einem Benutzer alle identifizierten Ereignisketten anzuzeigen und für die einzelnen Ereignisketten jeweils eine Benutzereingabe zu empfangen, welche die Priorität der Ereigniskette festlegt. Anschließend kann diese Priorität für die einzelnen Aktivierungsereignisse der Ereigniskette übernommen werden. Hierdurch kann beispielsweise für einzelne in Reaktion auf ein anliegendes Eingangssignal erzeugte Ausgangssignale jeweils eine eigene Priorität festgelegt werden.

Bei einer Weiterbildung des Verfahrens sind die automatisiert zugewiesenen Prioritäten durch den Benutzer innerhalb der Programmierumgebung anpassbar. Beispielsweise kann die Programmierumgebung dazu ausgebildet sein, dem Benutzer über eine Benutzerschnittstelle alle Aktivierungsereignisse, deren Prioritäten in Reaktion auf eine Benutzereingabe automatisiert angepasst werden, anzuzeigen und über eine Eingabeschnittstelle eine Benutzereingabe zur Anpassung der automatisiert zugewiesenen Prioritäten zu empfangen.

Diese Benutzereingabe kann beispielsweise Anpassungswerte für die Prioritäten einzelner dieser Aktivierungsereignisse umfassen. Alternativ kann die Benutzereingabe auch eine Abwahl einzelner Aktivierungsereignisse umfassen, sodass die Prioritäten der einzelnen abgewählten Aktivierungsereignisse nicht automatisiert angepasst werden. In Reaktion auf die Benutzereingabe kann die Programmierumgebung wiederum automatisiert einen Teil der Aktivierungsereignisse der Ereigniskette, beispielsweise alle Aktivierungsereignisse, die dem Aktivierungsereignis, für das die Benutzereingabe empfangen wird, nachfolgen und/oder vorausgehen, abwählen oder den Anpassungswert als Priorität zuweisen.

Bei einer Weiterbildung des Verfahrens wird einzelnen Aktivierungsereignissen eine vorbestimmte Priorität zugewiesen, wobei die vorbestimmte Priorität vorgegeben wird durch eine vordefinierte Priorität eines Ereignisausgangs oder eines Ereigniseingangs einer Vorlage für ein bei der Erstellung des Steuerprogramms verwendetes Programmmodul, beispielsweise einer Vorlage für ein bei der Erstellung des Steuerprogramms verwendetes Funktionsmodul oder Schnittstellenmodul. Hierdurch ist es möglich, einzelne Programmmodule des Steuerprogramms, insbesondere Funktionsmodule, mit vordefinierten Werten der von Ihnen erzeugten oder empfangenen Aktivierungsereignisse bereitzustellen.

Bei Erstellung des Programmmoduls aus der Vorlage kann die vorbestimmte Priorität allen Aktivierungsereignissen, welche über den Ereignisausgang bzw. Ereigniseingang übertragen werden, zugewiesen werden. Bei den Vorlagen für das Programmodul kann es sich insbesondere um Klassendefinitionen des betreffenden Programmoduls handeln, aus denen die einzelnen Programmodule bei Erstellung des Steuerprogramms als Instanzen abgeleitet werden.

Es wird ferner eine Ausführungsumgebung zur Ausführung eines ereignisorientierten Steuerprogramms auf einer speicherprogrammierbaren Steuerung eines Automatisierungssystems angegeben, wobei das Steuerprogramm mehrere Funktionsmodule umfasst. Die Ausführungsumgebung ist dazu ausgebildet, eine Ausführung der einzelnen Funktionsmodule ereignisgesteuert bei Eintritt von den einzelnen Funktionsmodulen jeweils zugeordneten Aktivierungsereignissen auszulösen. Dabei sind den Aktivierungsereignissen jeweils Prioritäten zugewiesen und die Ausführungsumgebung ist dazu ausgebildet, eingetretene Aktivierungsereignisse zu erfassen und die den eingetretenen Aktivierungsereignissen zugeordneten Funktionsmodule in einer anhand der Prioritäten der einzelnen Aktivierungsereignisse festgelegten Ausführungsreihenfolge auszuführen.

Die Ausführungsumgebung ist insbesondere dazu ausgebildet, die während der Laufzeit des Steuerprogramms durchgeführten Schritte des angegebenen Verfahrens auszuführen. Insofern beziehen sich alle technischen Effekte und Weiterbildungen, die im Zusammenhang mit dem angegebenen Verfahren beschrieben werden, auch auf die Ausführungsumgebung und umgekehrt.

Außerdem wird eine speicherprogrammierbare Steuerung mit einem Speichermodul angegeben, wobei in dem Speichermodul die angegebene Ausführungsumgebung zur Ausführung durch die Steuerung abgelegt ist. Die Steuerung kann mehrere Ausführungsressourcen bereitstellen. Dabei können die Ausführungsressourcen zumindest teilweise verteilt in unterschiedlichen Teilgeräten der Steuerung angeordnet sein. Die Teilgeräte können über eine Kommunikationsverbindung, etwa eine drahtlose und/oder kabelgebundene Verbindung miteinander verbunden sein. Die Kommunikationsverbindung kann beispielsweise ein Feldbussystem sein. Die Teilgeräte können jeweils eigene, getrennt voneinander ausgebildete Speichermodule umfassen und in den Speichermodulen können jeweils die von den betreffenden Teilgeräten auszuführenden Teilumgebungen der Ausführungsumgebung abgelegt sein.

Die speicherprogrammierbare Steuerung, insbesondere deren Teilgeräte, können externe Eingangsschnittstellen zum Anschluss von Sensoren und externe Ausgabeschnittstellen zum Anschluss von Aktoren aufweisen und dazu ausgebildet sein, über die externen Eingangsschnittstellen Sensorsignale von einem automatisierten Prozess einzulesen und über die Ausgangsschnittstellen Ausgabesignale an den automatisierten Prozess auszugeben.

Zudem wird ein Automatisierungssystem mit einer derartigen speicherprogrammierbaren Steuerung angegeben. Das Automatisierungssystem, etwa die speicherprogrammierbare Steuerung und/oder mit der speicherprogrammierbaren Steuerung verbundene Schnittstellenmodule des Automatisierungssystems, kann externe Eingangsschnittstellen zum Anschluss von Sensoren und externe Ausgabeschnittstellen zum Anschluss von Aktoren aufweisen und dazu ausgebildet sein, über die externen Eingangsschnittstellen Sensorsignale aus einem automatisierten Prozess einzulesen und über die Ausgangsschnittstellen Ausgabesignale an den automatisierten Prozess auszugeben.

Es wird ferner ein nicht-flüchtiges, computerlesbares Medium angegeben, auf dem Anweisungen zur Ausführung einzelner oder aller Schritte des angegebenen Verfahrens bzw. zur Realisierung der beschriebenen Ausführungsumgebung abgelegt sind. Das computerlesbare Medium kann beispielsweise als physikalisches Medium, etwa als CD oder DVD, oder als Datenspeicherort, welcher über eine Datenverbindung, beispielsweise das Internet, zugänglich ist, ausgebildet sein. Das Medium kann beispielsweise als online Software-Repository oder als Cloud-Datenspeicher ausgebildet sein.

Die Erfindung wird nachfolgend anhand von Figuren erläutert. Dabei zeigen in jeweils schematischer Darstellung:
- Fig. 1: ein Automatisierungssystem mit einer Steuerung zur Ausführung eines ereignisgesteuerten Steuerprogramms;
- Fig. 2: Funktionsmodule des Steuerprogramms;
- Fig. 3: eine Ausführungsumgebung zur Ausführung des Steuerprogramms durch die Steuerung;
- Fig. 4: eine erste und eine zweite Ereigniskette des Steuerprogramms;
- Fig. 5: Aktivierungsereignissen der ersten und zweiten Ereigniskette zugewiesene Prioritäten;
- Fig. 6: eine zur Ausführung des Steuerprogramms durch die Ausführungsumgebung verwaltete Abarbeitungsliste zu einem ersten Zeitpunkt;
- Fig. 7: die Abarbeitungsliste zu einem späteren zweiten Zeitpunkt;
- Fig. 8: die Abarbeitungsliste zu einem noch späteren dritten Zeitpunkt;
- Fig. 9: eine alternative Form der Abarbeitungsliste zu dem dritten Zeitpunkt;
- Fig. 10: die alternative Form der Abarbeitungsliste zu einem nachfolgenden vierten Zeitpunkt;
- Fig. 11: die alternative Form der Abarbeitungsliste zu einem nachfolgenden fünften Zeitpunkt;
- Fig. 12: eine weitere Ereigniskette des Steuerprogramms;
- Fig. 13: über eine Kommunikationsverbindung verbundene erste und zweite Teilgeräte der Steuerung; und
- Fig. 14: ein Verfahren zur Ausführung des Steuerprogramms.

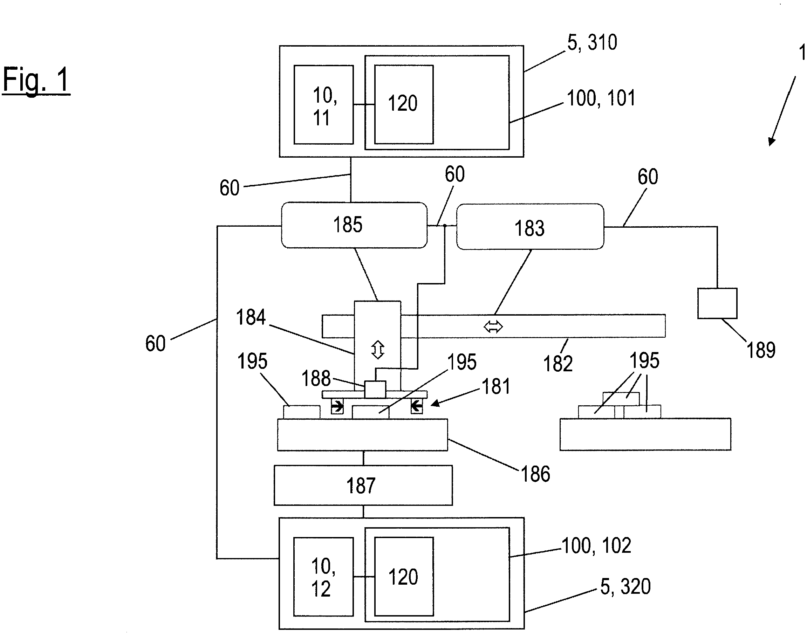

**Fig. 1** zeigt ein Automatisierungssystem, welche beispielhaft als Maschine 1 zur Handhabung von Werkstücken 195 ausgebildet ist. Die Maschine 1 umfasst einen Förderer 186, auf welchem die Werkstücken 195 angeliefert werden, und einen Greifer 181, mittels dessen die Werkstücke 195 vom Förderer 186 aufgenommen und anschließend andernorts abgelegt werden. Zur Bewegung des Greifer 181 umfasst die Maschine 1 eine Transversalkinematik 182, welche von einem ersten Aktor 183 angetrieben wird, und eine von einem zweiten Aktor 185 angetriebene Höhenkinematik 184. Der Förderer 186 wird von einem dritten Aktor 187 angetrieben. Die Aktoren 183, 185, 187 sind dabei jeweils als elektrische Antriebe ausgebildet.

Zusätzlich zu den Aktoren 183, 185, 187 umfasst die Maschine 1 einen zeitkritischen Sensor 188, welcher den Abstand des Greifer 181 zu den einzelnen Werkstücken 195 auf dem Förderer 186 misst, und einen weiteren, nicht zeitkritischen Sensor 189, welcher als Benutzerschnittstelle ausgebildet ist und über den Kenndaten der Werkstücke 195 vorgegeben werden können.

Die Maschine 1 umfasst außerdem eine mit den Aktoren 183, 185, 187 und den Sensoren 188, 189 über eine als Feldbus ausgebildete externe Kommunikationsverbindung 60 verbundene speicherprogrammierbare Steuerung 5. Die speicherprogrammierbare Steuerung 5 umfasst ein erstes Teilgerät 310 und ein zweites Teilgerät 320, welche getrennt voneinander an die Kommunikationsverbindung 60 angeschlossen sind. Über die Kommunikationsverbindung 60 werden Eingangssignale von den Sensoren 188, 189 zu den Teilgeräten 310, 320 der Steuerung 5 und Ausgangssignale von den Teilgeräten 310, 320 an die Aktoren 183, 185, 187 übertragen.

Die Steuerung 5 weist ein ereignisorientiertes Steuerprogramm 10 auf, wobei ein erstes Teilprogramm 11 des Steuerprogramms 10 in einem Speichermodul des ersten Teilgeräts 310 und ein zweites Teilprogramm 12 des Steuerprogramms 10 in einem Speichermodul des zweiten Teilgeräts 320 abgelegt ist. Das Steuerprogramm 10 umfasst alle Anweisungen zum Einlesen der Sensorsignale über die Kommunikationsverbindung 60, zur Erzeugung der Ausgangssignale mittels logischer Verknüpfung der eingelesenen Sensorsignale und zur Ausgabe der Ausgangssignale über die Kommunikationsverbindung 60.

Zur Ausführung des Steuerprogramms 10 umfasst die Steuerung 5 eine Ausführungsumgebung 100 mit einer auf dem ersten Teilgerät 310 ausgeführten ersten Teilumgebung 101 und einer auf dem zweiten Teilgerät 320 ausgeführten zweiten Teilumgebung 102. Die Teilumgebungen 101, 102 der Ausführungsumgebung 100 umfassen jeweils Ausführungsmodule 120 zur Ausführung des Steuerprogramms 10.

Bei der Ausführung des Steuerprogramms 10 muss sichergestellt sein, dass die Aktoren 183, 185 zur Bewegung des Greifers 181 priorisiert innerhalb vorgegebener Zeitdauern auf ein über den zeitkritischen Sensor 188 eingelesenes Eingangssignal zur Anzeige einer Annäherung des Greifers 181 an die Werkstücke 195 reagiert. Andernfalls bestünde die Gefahr, dass der Greifer 181 unkontrolliert mit den Werkstücken 195 kollidiert und diese beschädigt. Insofern stellen die von dem zeitkritischen Sensor 188 bereitgestellten Eingangssignale zeitkritische Eingangssignale dar und die Reaktion des Greifers 181 auf die über den zeitkritischen Sensor 188 eingelesenen Eingangssignale stellt eine zeitkritische Reaktion des Steuerprogramms dar.

Dagegen werden die über den Sensor 189 eingelesenen Parameter der Werkstücke 195 lediglich dazu verwendet, die Bewegung des Greifers 181 optimal an die Massenträgheit der Werkstücke 195 anzupassen. Hierzu werden die eingelesenen Parameter bei der Ausführung des Steuerprogramms 10 zur Erstellung angepasster Ausgangssignale für die Aktoren 183, 185 verwendet. Die Erstellung der angepassten Ausgangssignale stellt eine zeitunkritische Reaktion des Steuerungsprogramms 10 dar, welche keinen Zeitanforderungen unterliegt und daher mit einer niedrigeren Priorität als die Reaktion des Greifers 181 auf die Sensorsignale des Sensors 188 ausgeführt wird.

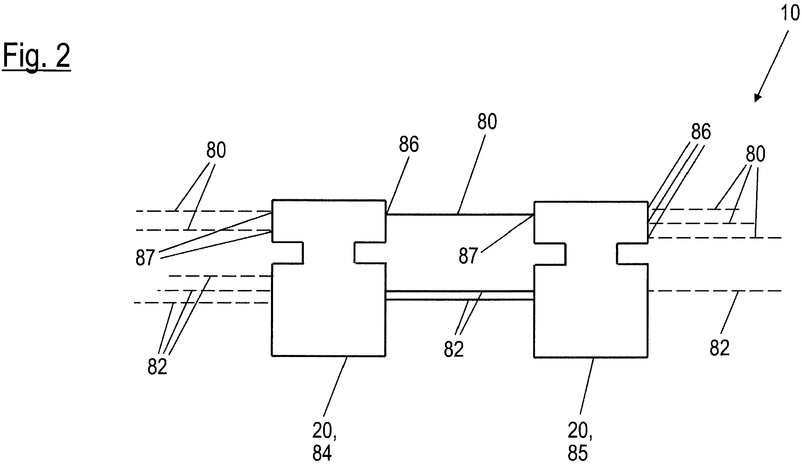

Das Steuerprogramm 10 ist gemäß den Vorgaben der Norm IEC 61499 ausgeführt und umfasst eine Mehrzahl von als Funktionsblöcke gemäß IEC 61499 ausgebildeten Funktionsmodulen. In **Fig. 2** sind beispielhaft zwei dieser Funktionsmodule 20 dargestellt. Die einzelnen Funktionsmodule 20 sind jeweils über Ereignisverbindungen 80 und Datenverbindungen 82 miteinander verbunden. Die einzelnen Ereignisverbindungen 80 verbinden dabei jeweils einen Ereignisausgang 86 eines vorangehenden Funktionsmoduls 84 mit einem Ereigniseingang 87 eines nachfolgenden Funktionsmoduls 85. Über die Ereigniseingänge 87 empfangen die einzelnen Funktionsmodule 20 Aktivierungsereignisse, welche eine Ausführung der einzelnen Funktionsmodule 20 auslösen. Über die Ereignisausgänge 86 stellen die einzelnen Funktionsmodule 20 ihrerseits Aktivierungsereignisse bereit, welche eine Ausführung nachfolgender Funktionsmodule 85 bewirken. Die für die Ausführung der einzelnen Funktionsmodule 20 benötigten Daten werden zwischen den Funktionsmodulen 20 über die Datenverbindungen 82 übertragen.

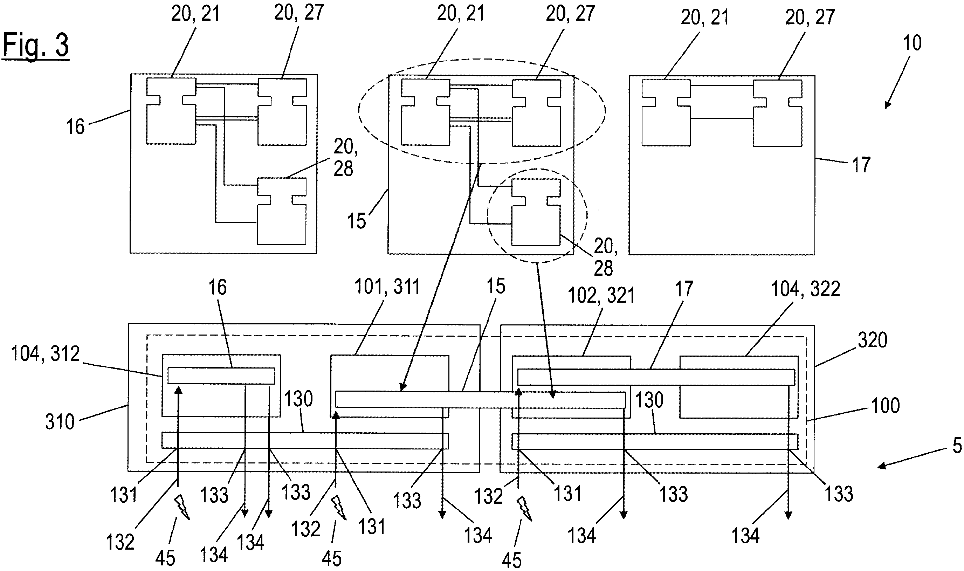

**Fig. 3** zeigt die Implementierung der Ausführungsumgebung 100 auf den Teilgeräten 310, 320 der speicherprogrammierbaren Steuerung 5. Zur Ausführung des Steuerprogramms 10 stellt das erste Teilgerät 310 eine erste Ausführungsressource 311 und eine zweite Ausführungsressource 312 bereit. Das zweite Teilgerät 320 stellt eine dritte Ausführungsressource 321 und eine vierte Ausführungsressource 322 bereit. Die erste Teilumgebung 101 der Ausführungsumgebung 100 wird auf der ersten Ausführungsressource 311 ausgeführt und die zweite Teilumgebung 102 auf der dritten Ausführungsressource 321. Auf der zweiten und vierten Ausführungsressource 312, 322 werden jeweils weitere Teilumgebungen 104 der Ausführungsumgebung 100 ausgeführt.

Das Steuerprogramm 10 umfasst eine erste Anwendung 15, eine zweite Anwendung 16 und eine dritte Anwendung 17. Die Anwendungen 15, 16, 17 umfassen jeweils über Ereignis- und Datenverbindungen miteinander verbundene Funktionsmodule 20, wobei die erste und zweite Anwendung 15, 16 jeweils ein Anfangsmodul 21 und je ein mit dem Anfangsmodul 21 der betreffenden Anwendung 15, 16 verbundenes erstes und zweites Abschlussmodul 27, 28 umfassen. Die dritte Anwendung 17 umfasst nur ein einzelnes mit einem Anfangsmodul 21 verbundenes Abschlussmodul 27. Dabei können die einzelnen Abschlussmodule 27, 28 jeweils über in Fig. 3 nicht dargestellte zusätzliche Funktionsmodule 20 mit ihrem jeweiligen Anfangsmodul 21 verbunden sein. Außerdem können die einzelnen Anwendungen 15, 16, 17 jeweils mehr als ein Anfangsmodul 21 aufweisen. Die Anfangsmodule 21 sind jeweils als *responder function blocks* ausgebildete *service function blocks* gemäß IEC 61499.

Bei einer Ausführung des Steuerprogramms 10 werden ausgehend von den einzelnen Anfangsmodulen 21 alle über Ereignisverbindungen miteinander verbundenen Funktionsmodule 20 der Reihe nach bis zur Ausführung der einzelnen Abschlussmodule 27, 28 ausgeführt. Die erste Anwendung 15 wird verteilt in der ersten Teilumgebung 101 auf der ersten Ausführungsressource 311 und in der zweiten Teilumgebung 102 auf der dritten Ausführungsressource 321 ausgeführt. Dabei wird ein zur Ausführung des ersten Abschlussmoduls 27 führender Programmteil vollständig in der ersten Teilumgebung 101 und ein zur Ausführung des zweiten Abschlussmoduls 28 führender Programmteil teilweise in der ersten Teilumgebung 101 und teilweise in der zweiten Teilumgebung 102 ausgeführt. Die zweite Anwendung 16 wird vollständig in der auf der zweiten Ausführungsressource 312 ausgeführten weiteren Teilumgebung 104 ausgeführt, die dritte Anwendung 17 verteilt in der zweiten Teilumgebung 102 und der auf der vierten Ausführungsressource 322 ausgeführten weiteren Teilumgebung 104.

Bei dem dargestellten Steuerprogramm 10 wird die Ausführung der Anfangsmodule 21 jeweils durch externe Ursprungsereignisse 45 ausgelöst, welche in der Erfassung von Sensorsignalen 132 durch die Sensoren 188, 189 bestehen. Die Sensorsignale 132 werden über die Kommunikationsverbindung 60 zu den Teilgeräten 310, 320 der Steuerung 5 übertragen und über mit der Kommunikationsverbindung 60 verbundene externe Eingangsschnittstellen 131 von Schnittstellenmodulen 130 der Ausführungsumgebung 100 eingelesen. Bei der Ausführung der Abschlussmodule 27, 28 werden jeweils Ausgangssignale 134 für die Aktoren 183, 185, 187 der Maschine 1 erstellt, welche über externe Ausgabeschnittstellen 133 der Schnittstellenmodule 130 und die mit den Ausgabeschnittstellen 133 verbundene Kommunikationsverbindung 60 an die Aktoren 183, 185, 187 übertragen werden.

Soweit einander nachfolgende Funktionsmodule 20 auf unterschiedlichen Ausführungsressourcen 311, 312, 321, 322 ausgeführt werden, sind die Ereignis- und Datenverbindungen zwischen den betreffenden Funktionsmodulen 20 über Kommunikationsverbindungen ausgeführt, die die Ausführungsressourcen 311, 312, 321, 322 miteinander verbinden, beispielsweise über den in Fig. 1 dargestellten Feldbus 60 bei auf unterschiedlichen Teilgeräten 310, 320 realisierten Ausführungsressourcen 311, 312, 321, 322 oder über interne Bussysteme einzelner Teilgeräte 310, 320 bei auf demselben Teilgerät 310, 320 ausgeführten Ausführungsressourcen 311, 312, 321, 322.

Eine zur Erstellung des Steuerprogramms 10 verwendetes Programmierumgebung ist dazu ausgebildet, jeweils einzelne Ereignisketten zu erkennen, wobei die einzelnen Ereignisketten jeweils alle Aktivierungsereignisse derjenigen Funktionsmodule 20 erfassen, die als Reaktion auf die Eingangssignale 132 der Reihe nach bis zur Ausführung eines der Abschlussmodule 27, 28 ausgeführt werden. Dabei wird für jede Kombination aus den Eingangssignalen 132 und einem der auf Grundlage der betreffenden Eingangssignale 132 ausgeführten Abschlussmodulen 27, 28 eine eigene Ereigniskette gebildet.

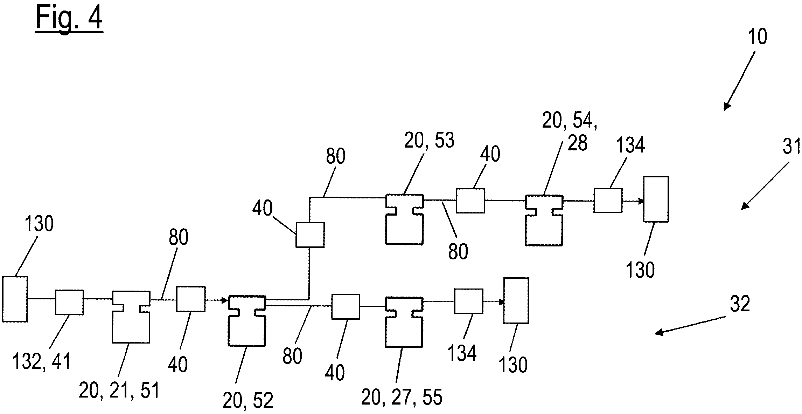

**Fig. 4** zeigt eine erste Ereigniskette 31 und eine zweite Ereigniskette 32 des Steuerprogramms 10. Die erste und zweite Ereigniskette 31, 32 beginnen mit dem gleichen Anfangsereignis 41, welches beim Einlesen eines Sensorsignals 132 über das Schnittstellenmodul 130 erzeugt wird. Das Anfangsereignis 41 löst die Ausführung eines ersten Funktionsmoduls 51 aus, welches als *responder function block* ein Anfangsmodul 21 sowohl der ersten, als auch der zweiten Ereigniskette 31, 32 bildet.

Bei Ausführung der ersten Ereigniskette 31 werden anschließend nacheinander Aktivierungsereignisse 40 zur Ausführung eines zweiten Funktionsmoduls 52, eines dritten Funktionsmoduls 53 und eines vierten Funktionsmoduls 54 erzeugt. Das vierte Funktionsmodul 54 bildet ein Abschlussmodul 28 der ersten Ereigniskette 31. Es erzeugt ein Ausgangssignal 134, welches über die externe Ausgabeschnittstelle 133 der Ausführungsumgebung 100 ausgegeben wird.

Bei Ausführung der zweiten Ereigniskette 32 werden nach Ausführung des ersten Funktionsmoduls 51 Aktivierungsereignisse 40 zur Ausführung des zweiten Funktionsmoduls 52, sowie eines fünften Funktionsmoduls 55 erzeugt. Das fünfte Funktionsmodul 55 bildet ein Abschlussmodul 27 der zweiten Ereigniskette 32 und erzeugt ein weiteres Ausgangssignal 134 zur Ausgabe über eine externe Ausgabeschnittstelle 133 des Schnittstellenmoduls 130.

Bei alternativen Ausführungsformen kann eines der Abschlussmodule 27, 28 oder können beide Abschlussmodule 27, 28 auch einen internen Status der Steuerung 5 verändern, beispielsweise zusätzlich zur Ausgabe der Ausgangssignale 134 oder alternativ zur Ausgabe der Ausgangssignale 134. Des Weiteren kann auch eines der weiteren Funktionsmodule 51, 52, 53 oder können mehrere oder alle der weiteren Funktionsmodule 51, 52, 53 ein Ausgangssignal 134 erzeugen oder einen internen Status der Steuerung 5 verändern.

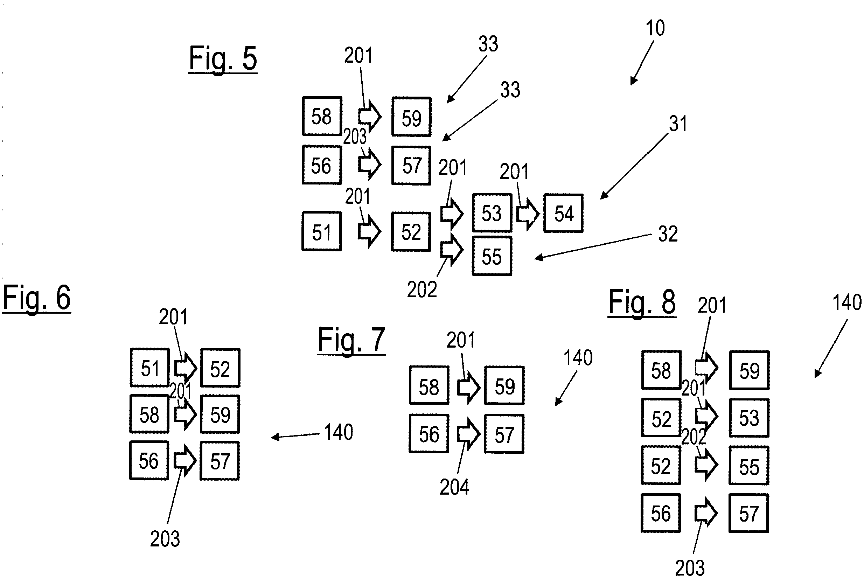

Den einzelnen Aktivierungsereignissen 40 der ersten und zweiten Ereigniskette 31, 32 sind jeweils Prioritäten zugewiesen, welche in **Fig. 5** dargestellt sind. Dem von dem ersten Funktionsmodul 51 erzeugten Aktivierungsereignis 40 zur Ausführung des zweiten Funktionsmoduls 52 ist eine erste Priorität 201 zugewiesen, welche auch allen weiteren Aktivierungsereignissen 40 der ersten Ereigniskette 31 zugewiesen ist, nämlich dem von dem zweiten Funktionsmodul 52 erzeugten Aktivierungsereignis zur Ausführung des dritten Funktionsmoduls 53 und dem von dem dritten Funktionsmodul 53 erzeugten Aktivierungsereignis zur Ausführung des vierten Funktionsmoduls 54. Dem bei der Ausführung des zweiten Funktionsmoduls 52 ebenfalls erzeugten Aktivierungsereignis zur Ausführung des fünften Funktionsmoduls 55 ist eine zweite Priorität 202 zugewiesen.

Wie in Fig. 5 dargestellt ist, umfasst das Steuerprogramm 10 auch noch weitere Ereignisketten 33, wobei eine der weiteren Ereignisketten 33 ein sechstes und siebtes Funktionsmodul 56, 57 und die andere der weiteren Ereigniskette 33 ein achtes und neuntes Funktionsmodul 58, 59 umfasst. Das sechste Funktionsmodul 56 erzeugt ein Aktivierungsereignis mit einer dritten Priorität 203 zur Ausführung des siebten Funktionsmoduls 57 und das achte Funktionsmodul 58 erzeugt ein Aktivierungsereignis mit der ersten Priorität 201 zur Ausführung des neunten Funktionsmoduls 59.

Die erste, zweite und dritte Priorität 201, 202, 203 bilden der Reihe nach absteigende Prioritäten, so dass die erste Priorität die höchste Priorität und die dritte Priorität die niedrigste Priorität darstellt. Bei der Ausführung des Steuerprogramms 10 liegen die durch das erste, sechste und achte Funktionsmodul 51, 56, 58 erzeugten Aktivierungsereignisse zur gleichen Zeit vor, beispielsweise werden sie im Wesentlichen gleichzeitig, das heißt innerhalb einer im Vergleich zur Ausführungsdauer der Funktionsmodule kurzen Zeit, nacheinander bereitgestellt und durch die Ausführungsumgebung 100 erfasst, und es liegen, zu einem späteren Zeitpunkt, zusätzlich die beiden durch das zweite Funktionsmodul 52 erzeugten Aktivierungsereignisse vor. Beispielsweise werden die durch das zweite Funktionsmodul 52 erzeugten Aktivierungsereignisse ebenfalls im Wesentlichen gleichzeitig bereitgestellt und erfasst.

**Fig. 6** zeigt eine Abarbeitungsliste 140, die ein nicht dargestelltes Listenverwaltungsmodul der Ausführungsumgebung 100 zur Ausführung des Steuerprogramms 10 verwaltet, zu einem ersten Zeitpunkt nach Erfassung der durch das erste, sechste und achte Funktionsmodul 51, 56, 58 erzeugten Aktivierungsereignisse. In der Abarbeitungsliste 140 sind diese Aktivierungsereignisse gemäß ihren Prioritäten 201, 203 in absteigender Reihenfolge beginnend mit der höchsten Priorität, nämlich der ersten Priorität 201, bis zur niedrigsten Priorität, nämlich der dritten Priorität 203, angeordnet.

**Fig. 7** zeigt die Abarbeitungsliste 140 zu einem späteren zweiten Zeitpunkt während der Ausführung des zweiten Funktionsmoduls 52, welches gemäß der durch die Abarbeitungsliste 140 festgelegten Ausführungsreihenfolge zuerst ausgeführt wird. Während der Ausführung des zweiten Funktionsmoduls 52 umfasst die Abarbeitungsliste 140 noch das Aktivierungsereignis mit der dritten Priorität 203 zur Ausführung des siebten Funktionsmoduls 57 und das Aktivierungsereignis mit der ersten Priorität 201 zur Ausführung des neunten Funktionsmoduls 59.

**Fig. 8** zeigt die Abarbeitungsliste 140 zu einem noch späteren dritten Zeitpunkt nach Ausführung des zweiten Funktionsmoduls 52. Bei der Ausführung des zweiten Funktionsmoduls 52 wurden das Aktivierungsereignis mit der ersten Priorität 201 zur Aktivierung des dritten Funktionsmoduls 53 und das Aktivierungsereignis mit der zweiten Priorität 202 zur Aktivierung des fünften Funktionsmoduls 55 erzeugt. Nach ihrer Erfassung durch die Ausführungsumgebung 100 werden diese beiden Aktivierungsereignisse basierend auf ihren Prioritäten 201, 202 in die Abarbeitungsliste 140 eingefügt.

Dabei wird das Aktivierungsereignis zur Aktivierung des fünften Funktionsmoduls 55, welches die zweite Priorität 202 aufweist, zwischen dem Aktivierungsereignis mit der ersten Priorität 201 zur Aktivierung des neunten Funktionsmoduls 59 und dem Aktivierungsereignis mit der dritten Priorität 203 zur Aktivierung des siebten Funktionsmoduls 57 eingefügt. Die Position des Aktivierungsereignisses mit der ersten Priorität 201 zur Aktivierung des dritten Funktionsmoduls 53 wird von der Ausführungsumgebung 100 nach dem FIFO-Prinzip festgelegt, sodass das betreffende Aktivierungsereignis nach dem bereits in der Abarbeitungsliste 140 befindlichen Aktivierungsereignis zur Ausführung des neunten Funktionsmoduls 59, welches ebenfalls die erste Priorität 201 aufweist, und vor den Aktivierungsereignissen zur Aktivierung des fünften und siebten Funktionsmoduls 55, 57, welche die zweite bzw. dritte Priorität 202, 203 aufweisen, eingefügt wird.

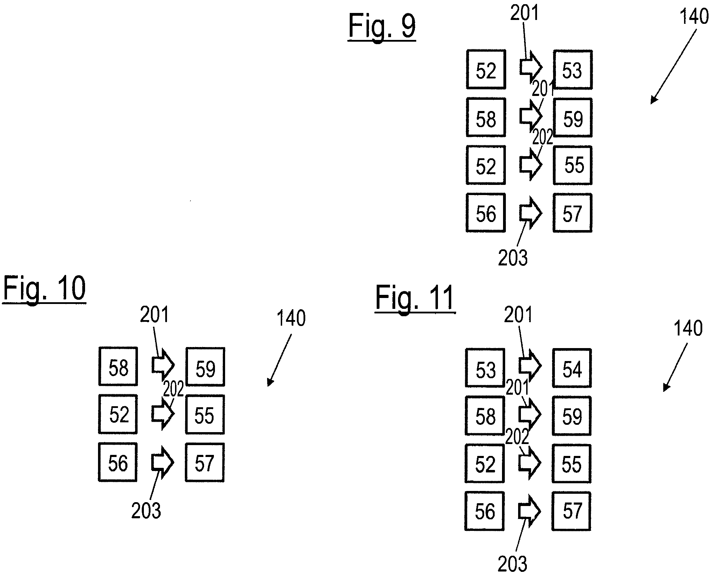

**Fig. 9** zeigt die Abarbeitungsliste 140 zu dem dritten Zeitpunkt bei einer alternativen Ausgestaltung der Ausführungsumgebung 100, welche bei der Bestimmung der Position des Aktivierungsereignisses zur Aktivierung des dritten Funktionsmoduls 53 anstelle des FIFO-Prinzips das LIFO-Prinzip anwendet. Dabei wird das betreffende Aktivierungsereignis noch vor dem Aktivierungsereignis gleicher Priorität zur Aktivierung des neunten Funktionsmoduls 59 in die Abarbeitungsliste 140 eingefügt.

**Fig. 10** zeigt die Abarbeitungsliste 140 bei Anwendung des LIFO-Prinzips zu einem nachfolgenden vierten Zeitpunkt während der Ausführung des dritten Funktionsmoduls 53. Nach Ausführung des dritten Funktionsmoduls 53 erfasst die Ausführungsumgebung 100 das Aktivierungsereignis zur Ausführung des vierten Funktionsmoduls 54, welches die erste Priorität 201 aufweist. Wie in **Fig. 11****,** welche die Abarbeitungsliste zu einem nachfolgenden fünften Zeitpunkt zeigt, dargestellt ist, wird dieses Aktivierungsereignis anschließend vor dem ebenfalls die erste Priorität 201 aufweisenden Aktivierungsereignis zur Ausführung des neunten Funktionsmoduls 59 in die Abarbeitungsliste 140 eingetragen. Folglich werden bei der Anwendung des LIFO-Prinzips zunächst alle Funktionsmodule 51, 52, 53, 54 der ersten Ereigniskette 31 ausgeführt, ehe mit der Abarbeitung aller weiteren Ereignisketten 32, 33 begonnen wird, insbesondere ehe mit der Abarbeitung des ebenfalls die erste Priorität 201 aufweisenden Aktivierungsereignisses zur Ausführung des neunten Funktionsmoduls 59 begonnen wird.

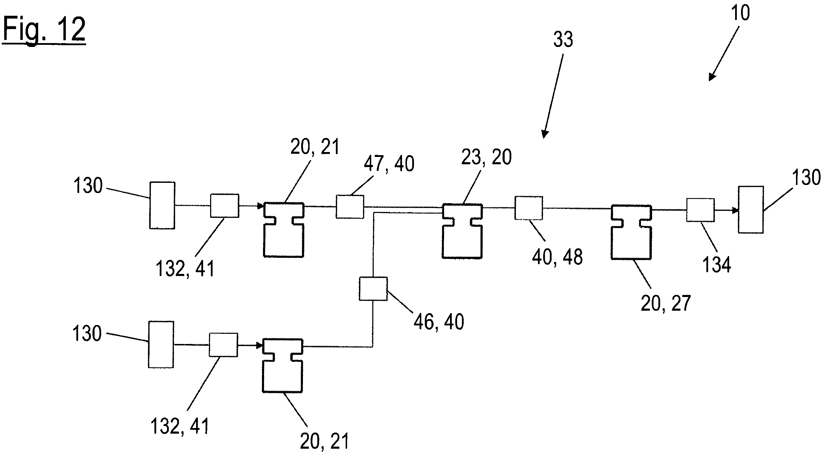

**Fig. 12** zeigt eine weitere Ereigniskette 33 des Steuerprogramms 10. Die Ereigniskette 33 umfasst zwei Anfangsmodule 21, welche durch zwei als Anfangsereignisse 41 durch das Schnittstellenmodul 130 bereitgestellte Sensorsignale 132 aktiviert werden. Die Anfangsmodule 21 erzeugen jeweils ein erstes Aktivierungsereignis 46 und ein zweites Aktivierungsereignis 47, welche beide Ereigniseingängen eines als Vereinigungsmodul 23 ausgebildeten Funktionsmoduls 20 zugeführt werden.

Das Vereinigungsmodul 23 ist dazu ausgebildet, erst bei Eintritt des ersten und zweiten Aktivierungsereignisses 46, 47 ausgeführt zu werden. Es erzeugt ein nachfolgendes Aktivierungsereignis 48 zur Aktivierung eines weiteren Funktionsmoduls 20, welches das Abschlussmodul 27 der Ereigniskette 33 darstellt. Die bei der Erstellung des Steuerprogramms 10 verwendete Programmierumgebung ist dazu ausgebildet, dem nachfolgenden Aktivierungsereignis 48 automatisiert eine auf Basis der Prioritäten des ersten und zweiten Aktivierungsereignisses 46, 47 zur Aktivierung des Vereinigungsmoduls 23 festgelegte Priorität zuzuweisen. Hierbei wird dem nachfolgenden Aktivierungsereignis 48 die Niedrigste der Prioritäten des ersten und zweiten Aktivierungsereignisses 46, 47 zugewiesen. Weist beispielsweise das erste Aktivierungsereignis 46 die zweite Priorität 202 und das zweite Aktivierungsereignis 47 die dritte Priorität 203 auf, so wird dem nachfolgenden Aktivierungsereignis 48 automatisiert die dritte Priorität 203 zugewiesen.

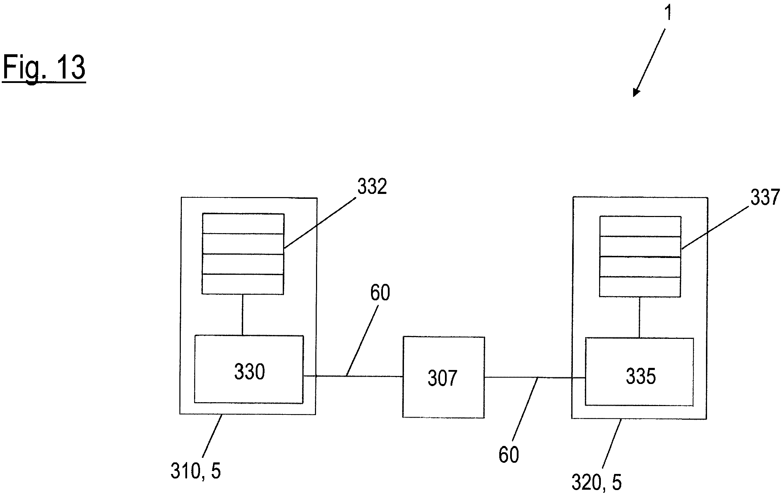

**Fig. 13** zeigt das erste Teilgerät 310 und das zweite Teilgerät 320 der speicherprogrammierbaren Steuerung 5 der Maschine 1, welche mittels der Kommunikationsverbindung 60 über ein als Router ausgebildetes Zwischengerät 307 miteinander verbunden sind. Die auf den Teilgeräten 310, 320 ausgeführten Teilumgebungen 101, 102 der Ausführungsumgebung 100 sind dazu ausgebildet, auf dem ersten Teilgerät 310 erzeugte Aktivierungsereignisse zur Aktivierung von auf dem zweiten Teilgerät 320 ausgeführten Funktionsmodulen über die Kommunikationsverbindung 60 und das zwischengeschaltete Zwischengerät 307 zu übertragen.

Das erste Teilgerät 310 umfasst eine Sendeeinheit 330, welche in einer Sendewarteschlange 332 abgelegte Aktivierungsereignisse in einer durch ihre Position in der Sendewarteschlange 332 bestimmten Reihenfolge über die Kommunikationsverbindung 60 an den Router 307 sendet. Die auf dem ersten Teilgerät 310 ausgeführte Teilumgebung 101 der Ausführungsumgebung 100 legt dabei die einzelnen Aktivierungsereignisse derart in der Sendewarteschlange 332 ab, dass eine Sendereihenfolge der einzelnen Aktivierungsereignisse durch ihre Prioritäten festgelegt wird und die Aktivierungsereignisse mit absteigender Priorität der Reihe nach gesendet werden. Analog ist der Router 307 dazu ausgebildet, die einzelnen Aktivierungsereignisse mit absteigender Priorität der Reihe nach an das zweite Teilgerät 320 weiterzuleiten.

Das zweite Teilgerät 320 weist eine Empfangseinheit 335 auf, welche die über die Kommunikationsverbindung 60 empfangenen Aktivierungsereignisse in einer Empfangswarteschlange 337 ablegt. Dabei bestimmt sich die Position der einzelnen Aktivierungsereignisse in der Empfangswarteschlange 337 nach deren Priorität, wobei die einzelnen Aktivierungsereignisse der Reihe nach mit absteigender Priorität in der Empfangswarteschlange 337 abgelegt werden. Die auf dem zweiten Teilgerät 320 ausgeführte Teilumgebung 102 der Ausführungsumgebung 100 ist dazu ausgebildet, die Aktivierungsereignisse gemäß ihrer Position in der Empfangswarteschlange 337 der Reihe nach mit absteigender Priorität abzuarbeiten.

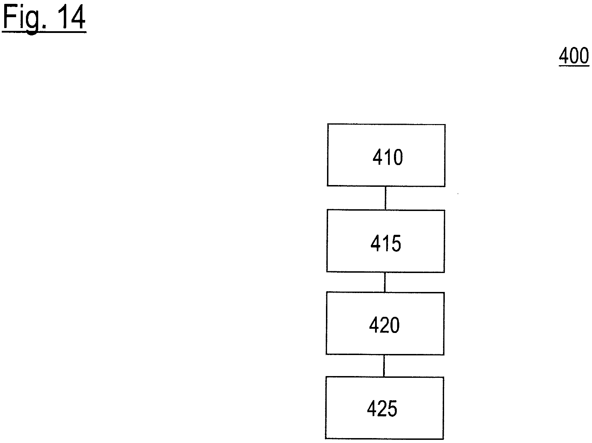

**Fig. 14** zeigt ein durch die Ausführungsumgebung 100 zur Ausführung des Steuerprogramms 10 ausgeführtes Verfahren 400. Das Verfahren 400 umfasst ein Erfassen 410 eingetretener Aktivierungsereignisse 40, ein Eintragen 415 der erfassten Aktivierungsereignisse 40 in die Abarbeitungsliste 140, ein Ausführen 420 der den eingetretenen Aktivierungsereignissen 40 jeweils zugeordneten Funktionsmodule 20 in der durch die Abarbeitungsliste 140 vorgegebenen Ausführungsreihenfolge und ein Übertragen 425 von bei dem Ausführen 420 der Funktionsmodule 20 erzeugten Aktivierungsereignissen 40 über die Kommunikationsverbindung 60.

### Bezugszeichenliste

- 1: Maschine
- 5: speicherprogrammierbare Steuerung
- 10: Steuerprogramm
- 11: erstes Teilprogramm
- 12: zweites Teilprogramm
- 15: erste Anwendung
- 16: zweite Anwendung
- 17: dritte Anwendung
- 20: Funktionsmodul
- 21: Anfangsmodul
- 23: Vereinigungsmodul
- 27: erstes Abschlussmodul
- 28: zweites Abschlussmodul
- 31: erste Ereigniskette
- 32: zweite Ereigniskette
- 33: weitere Ereignisketten
- 40: Aktivierungsereignis
- 41: Anfangsereignis
- 46: erstes Aktivierungsereignis
- 47: zweites Aktivierungsereignis
- 48: nachfolgendes Aktivierungsereignis
- 51: erstes Funktionsmodul
- 52: zweites Funktionsmodul
- 53: drittes Funktionsmodul
- 54: viertes Funktionsmodul
- 55: fünftes Funktionsmodul
- 60: externe Kommunikationsverbindung
- 80: Ereignisverbindung
- 82: Datenverbindung
- 84: vorangehendes Funktionsmodul
- 85: nachfolgendes Funktionsmodul
- 86: Ereignisausgang
- 87: Ereigniseingang
- 100: Ausführungsumgebung
- 101: erste Teilumgebung
- 102: zweite Teilumgebung
- 104: weitere Teilumgebungen
- 120: Ausführungsmodul
- 130: Schnittstellenmodul
- 131: externe Eingangsschnittstelle
- 132: Eingangssignal
- 133: externe Ausgabeschnittstelle
- 134: Ausgangssignal
- 140: Abarbeitungsliste
- 181: Greifer
- 182: Transversalkinematik
- 183: erster Aktor
- 184: Höhenkinematik
- 185: zweiter Aktor
- 186: Förderer
- 187: dritter Aktor
- 188: zeitkritischer Sensor
- 189: Sensor
- 195: Werkstück
- 201: erste Priorität
- 202: zweite Priorität
- 203: dritte Priorität
- 307: Zwischengerät
- 310: erstes Teilgerät
- 311: erste Ausführungsressource
- 312: zweite Ausführungsressource
- 320: zweites Teilgerät
- 321: dritte Ausführungsressource
- 322: vierte Ausführungsressource
- 330: Sendeeinheit
- 332: Sendewarteschlange
- 335: Empfangseinheit
- 337: Empfangswarteschlange
- 400: Verfahren
- 410: Erfassen aufgetretener Aktivierungsereignisse
- 415: Eintragen in Abarbeitungsliste
- 420: Ausführung von Funktionsmodulen
- 425: Übertragen

## Patentansprüche

1. Verfahren (400) zur Ausführung eines ereignisorientierten Steuerprogramms (10) auf einer speicherprogrammierbaren Steuerung (5) eines Automatisierungssystems (1),
wobei das Steuerprogramm (10) mehrere Funktionsmodule (20) umfasst, wobei eine Ausführung der einzelnen Funktionsmodule (20) ereignisgesteuert bei Eintritt von den einzelnen Funktionsmodulen (20) jeweils zugeordneten Aktivierungsereignissen (40, 41, 46, 47, 48) ausgelöst wird,
wobei den Aktivierungsereignissen (40, 41, 46, 47, 48) jeweils Prioritäten zugewiesen sind,
wobei das Verfahren (400) die folgenden Schritte umfasst:
- Erfassen (410) eingetretener Aktivierungsereignisse (40, 41, 46, 47, 48);
- Ausführung (420) der den eingetretenen Aktivierungsereignissen (40, 41, 46, 47, 48) jeweils zugeordneten Funktionsmodule (20) in einer anhand der Prioritäten der einzelnen Aktivierungsereignisse (40, 41, 46, 47, 48) festgelegten Ausführungsreihenfolge.

2. Verfahren (400) nach Anspruch 1,
wobei das Steuerprogramm (10) ein gemeinsames Funktionsmodul (20) aufweist, dessen Ausführung durch ein erstes und ein zweites Aktivierungsereignis (40, 41, 46, 47, 48) auslösbar ist,
wobei dem ersten und zweiten Aktivierungsereignis (40, 41, 46, 47, 48) unterschiedliche Prioritäten zugewiesen sind,
wobei das gemeinsame Funktionsmodul (20) bei einer Auslösung durch das erste Aktivierungsereignis (40, 41, 46, 47, 48) mit der Priorität des ersten Aktivierungsereignisses (40, 41, 46, 47, 48) und bei einer Auslösung durch das zweite Aktivierungsereignis (40, 41, 46, 47, 48) mit der Priorität des zweiten Aktivierungsereignisses (40, 41, 46, 47, 48) ausgeführt wird.

3. Verfahren (400) nach einem der vorhergehenden Ansprüche, umfassend ein Eintragen (415) der eingetretenen Aktivierungsereignisse (40, 41, 46, 47, 48) in zumindest einer Abarbeitungsliste (140) unter Berücksichtigung der Prioritäten der einzelnen Aktivierungsereignisse (40, 41, 46, 47, 48).

4. Verfahren (400) nach Anspruch 3,
wobei Aktivierungsereignisse (40, 41, 46, 47, 48) unterschiedlicher Priorität in unterschiedliche Abarbeitungslisten (140) eingetragen werden und die einzelnen Abarbeitungslisten (140) jeweils nur Aktivierungsereignisse (40, 41, 46, 47, 48) gleicher Priorität umfassen.

5. Verfahren (400) nach einem der vorhergehenden Ansprüche,
wobei durch neu erfasste Aktivierungsereignisse (40, 41, 46, 47, 48) ausgelöste Funktionsmodule (20) später ausgeführt werden als Funktionsmodule (20), die durch bereits zuvor erfasste Aktivierungsereignisse (40, 41, 46, 47, 48) gleicher Priorität ausgelöst werden.

6. Verfahren (400) nach einem der Ansprüche 1 bis 4,
wobei durch neu erfasste Aktivierungsereignisse (40, 41, 46, 47, 48) ausgelöste Funktionsmodule (20) früher ausgeführt werden als Funktionsmodule (20), die durch bereits zuvor erfasste Aktivierungsereignisse (40, 41, 46, 47, 48) gleicher Priorität ausgelöst werden.

7. Verfahren (400) nach einem der vorhergehenden Ansprüche,
wobei die speicherprogrammierbare Steuerung (5) eine erste Ausführungsressource (311, 312, 321, 322) und eine mit der ersten Ausführungsressource (311, 312, 321, 322) über eine Kommunikationsverbindung (60) verbundene zweite Ausführungsressource (311, 312, 321, 322) aufweist,
wobei das Steuerprogramm (10) ein auf der ersten Ausführungsressource (311, 312, 321, 322) ausgeführtes erstes Teilprogramm (11, 12) und ein auf der zweiten Ausführungsressource (311, 312, 321, 322) ausgeführtes zweites Teilprogramm (11, 12) umfasst,
wobei das Verfahren (400) ein Übertragen (425) von auf der ersten Ausführungsressource (311, 312, 321, 322) eingetretenen Aktivierungsereignissen (40, 41, 46, 47, 48) von der ersten Ausführungsressource (311, 312, 321, 322) über die Kommunikationsverbindung (60) zu der zweiten Ausführungsressource (311, 312, 321, 322) umfasst,
wobei das Übertragen (425) mit anhand der Prioritäten der einzelnen Aktivierungsereignisse (40, 41, 46, 47, 48) bestimmten Übertragungsprioritäten erfolgt.

8. Verfahren (400) nach Anspruch 7,
wobei eine Sendereihenfolge, mit der die einzelnen Aktivierungsereignisse (40, 41, 46, 47, 48) von einer Sendeeinheit (330) der ersten Ausführungsressource (311, 312, 321, 322) über die Kommunikationsverbindung (60) gesendet werden, anhand der Prioritäten der einzelnen Aktivierungsereignisse (40, 41, 46, 47, 48) festgelegt wird, und/oder
wobei eine Weiterleitungsreihenfolge, mit der die einzelnen Aktivierungsereignisse (40, 41, 46, 47, 48) auf der Kommunikationsverbindung (60) weitergeleitet werden, anhand der Prioritäten der einzelnen Aktivierungsereignisse (40, 41, 46, 47, 48) festgelegt wird, und/oder
wobei eine Ausgabereihenfolge, mit der die einzelnen Aktivierungsereignisse (40, 41, 46, 47, 48) nach ihrem Empfang über die Kommunikationsverbindung (60) von einer Empfangseinheit (335) der zweiten Ausführungsressource (311, 312, 321, 322) zur Weiterverarbeitung ausgegeben werden, anhand der Prioritäten der einzelnen Aktivierungsereignisse (40, 41, 46, 47, 48) festgelegt wird.

9. Verfahren (400) nach einem der vorhergehenden Ansprüche,
wobei einzelnen Aktivierungsereignissen (40, 41, 46, 47, 48) ihre Priorität erst zu einer Ausführungszeit des Steuerprogramms (10) zugewiesen wird, beispielsweise unter Berücksichtigung eines zur Ausführungszeit erzeugten Parameterwerts.

10. Verfahren (400) nach Anspruch 9,
wobei die Aktivierungsereignisse (40, 41, 46, 47, 48) nachfolgend auszuführender Funktionsmodule (20) bei der Ausführung zuvor ausgeführter Funktionsmodule (20) erzeugt werden,
wobei den Aktivierungsereignissen (40, 41, 46, 47, 48) der nachfolgend auszuführenden Funktionsmodule (20) bei ihrer Erzeugung die Prioritäten derjenigen Aktivierungsereignisse (40, 41, 46, 47, 48) zugewiesen werden, welche die Ausführung der jeweilig zuvor ausgeführten Funktionsmodule (20) ausgelöst haben.

11. Verfahren (400) nach einem der vorhergehenden Ansprüche,
wobei das Steuerprogramm (10) ein Funktionsmodul (20, 23) umfasst, dessen Ausführung erst bei Eintritt eines ersten und mindestens eines zweiten Aktivierungsereignisses (40, 41, 46, 47, 48) ausgelöst wird,
wobei einem von diesem Funktionsmodul (20, 23) erzeugten Aktivierungsereignis (40, 41, 46, 47, 48) eine Priorität zugewiesen wird, welche der niedrigsten Priorität der die Ausführung des Funktionsmoduls (20, 23) auslösenden Aktivierungsereignisse (40, 41, 46, 47, 48) entspricht.

12. Verfahren (400) nach einem der vorhergehenden Ansprüche,
wobei bei der Ausführung des Steuerprogramms (10) auf Grundlage eines Quellereignisses (40, 41, 46, 47, 48) mehrere nachfolgende Aktivierungsereignisse (40, 41, 46, 47, 48) erzeugt werden,
wobei beispielsweise das Steuerprogramm (10) eine Ereigniskette (31, 32, 33) mit bei der Ausführung des Steuerprogramms (10) auf Grundlage des Quellereignisses (40, 41, 46, 47, 48) nacheinander erzeugten Aktivierungsereignissen (40, 41, 46, 47, 48) umfasst,
wobei eine Programmierumgebung zur Erstellung des Steuerprogramms (10) automatisiert den mehreren nachfolgenden Aktivierungsereignissen (40, 41, 46, 47, 48), beispielsweise mehreren Aktivierungsereignissen (40, 41, 46, 47, 48) der Ereigniskette (31, 32, 33), die gleiche Priorität zuweist.

13. Verfahren (400) nach Anspruch 12,
wobei die den mehreren Aktivierungsereignissen (40, 41, 46, 47, 48) zugewiesene Priorität durch einen Benutzer der Programmierumgebung vorgebbar ist und/oder
wobei die automatisiert zugewiesenen Prioritäten durch den Benutzer innerhalb der Programmierumgebung anpassbar sind.

14. Verfahren (400) nach einem der vorhergehenden Ansprüche,
wobei einzelnen Aktivierungsereignissen (40, 41, 46, 47, 48) eine vorbestimmte Priorität zugewiesen wird,
wobei die vorbestimmte Priorität vorgegeben wird durch eine vordefinierte Priorität eines Ereignisausgangs (86) oder eines Ereigniseingangs (87) einer Vorlage für ein bei der Erstellung des Steuerprogramms (10) verwendetes Programmmodul, beispielsweise einer Vorlage für ein bei der Erstellung des Steuerprogramms (10) verwendetes Funktionsmodul (20).

15. Ausführungsumgebung (100) zur Ausführung eines ereignisorientierten Steuerprogramms (10) auf einer speicherprogrammierbaren Steuerung (5) eines Automatisierungssystems (1),
wobei das Steuerprogramm (10) mehrere Funktionsmodule (20) umfasst, wobei die Ausführungsumgebung (100) dazu ausgebildet ist, eine Ausführung der einzelnen Funktionsmodule (20) ereignisgesteuert bei Eintritt von den einzelnen Funktionsmodulen (20) jeweils zugeordneten Aktivierungsereignissen (40, 41, 46, 47, 48) auszulösen,
wobei den Aktivierungsereignissen (40, 41, 46, 47, 48) jeweils Prioritäten zugewiesen sind,
wobei die Ausführungsumgebung (100) dazu ausgebildet ist, eingetretene Aktivierungsereignisse (40, 41, 46, 47, 48) zu erfassen und
die den eingetretenen Aktivierungsereignissen (40, 41, 46, 47, 48) zugeordneten Funktionsmodule (20) in einer anhand der Prioritäten der einzelnen Aktivierungsereignisse (40, 41, 46, 47, 48) festgelegten Ausführungsreihenfolge auszuführen.
